# EUROPEAN PATENT APPLICATION

(11) **EP 4 685 957 A1**
(43) Date of publication of application: **28.01.2026**
(21) Application number: 23928342.7
(22) Date of filing: 30.10.2023
(51) Int. Cl.: H01M 50/244

(54) **BATTERY PACK HOUSING, BATTERY PACK, AND ELECTRIC DEVICE**

(30) Priority: 21.03.2023 CN 202310306608
(71) Applicant: BYD Company Limited, Shenzhen, Guangdong 518118 (CN)
(72) Inventor: ZHAO, Jiayu, Shenzhen, Guangdong 518118 (CN); LU, Zhipei, Shenzhen, Guangdong 518118 (CN); PENG, Qingbo, Shenzhen, Guangdong 518118 (CN); CAI, Yaomin, Shenzhen, Guangdong 518118 (CN); SUN, Huajun, Shenzhen, Guangdong 518118 (CN)
(74) Representative: Mathys & Squire
(86) International application number: PCT/CN2023/127787
(87) International publication number: WO 2024/193038

(57) **Abstract**

An electrical device includes a battery pack. The battery pack includes a battery pack housing. The battery pack housing includes a tray and n layers of cold plates, wherein the tray includes a first side beam and a second side beam opposite to each other, m steps are separately disposed on either opposite side of the first side beam and the second side beam, and m≥3; two opposite ends of the n layers of cold plates are disposed on corresponding steps of the first side beam and the second side beam, each layer of cold plate corresponds to one step, each layer of cold plate is used for arrangement of a layer of battery cells, 2≤n≤m, and the m steps and the n layers of cold plates are numbered in an ascending order from the bottom to the top of the first side beam; and in a direction from the first side beam to the second side beam, a size of an (n-1)^{th} layer of cold plate is smaller than a size of the n^{th} layer of cold plate.

## Description

This application claims priority to Chinese Patent Application No. 202310306608.6, filed with the China National Intellectual Property Administration on March 21, 2023, and entitled "BATTERY PACK HOUSING, BATTERY PACK AND ELECTRICAL DEVICE", which is incorporated herein by reference in its entirety.

### TECHNICAL FIELD

This application relates to the field of battery technologies, and in particular, to a battery pack housing, a battery pack, and an electrical device.

### BACKGROUND

As the core of electric vehicles, the battery pack supplies energy to start and operate the electric vehicle, thereby providing an environment-friendly transportation means for human travel. The battery pack can be further applied to the fields of outdoor energy storage and household energy storage to improve energy utilization efficiency and reliability.

Current battery packs mainly use a single-layer battery cell arrangement to meet the needs of entire vehicles and structural reliability. With continuous technological updates and iterations, especially with an increasing demand for long-distance driving, in order to increase the driving range of an electric vehicle, either the battery cell capacity needs to be increased, or a number of battery cells and integration need to be improved. However, it is currently difficult to significantly improve the battery cell capacity and the integration. Therefore, how to increase the number of battery cells in the battery pack becomes a key research direction.

Considering limited installation space of electric vehicles, it is difficult to effectively increase the number of battery cells in the current battery pack with the single-layer battery cell arrangement. Currently, there is research on stacking a plurality of battery packs to form a whole module. However, in such a manner, the battery pack is large in overall volume and difficult to use in practice.

### SUMMARY

An objective of this application is to provide a battery pack housing, a battery pack, and an electrical device to solve problems that stacked battery packs are large in volume and difficult to use in practice.

In order to achieve the objective of this application, this application provides following technical solutions.

According to a first aspect, this application provides a battery pack housing, including:
a tray, including a first side beam and a second side beam opposite to each other, wherein m steps are separately disposed on either opposite side of the first side beam and the second side beam, m≥3, and the m steps are numbered in an ascending order from the bottom to the top of the first side beam; and
n layers of cold plates, wherein two opposite ends of the n layers of cold plates are disposed on corresponding steps of the first side beam and the second side beam, each layer of cold plate corresponds to one step, each layer of cold plate is used for arrangement of a layer of battery cells, 2≤n≤m, and the n layers of cold plates are numbered in an ascending order from the bottom to the top of the first side beam.

In a direction from the first side beam to the second side beam, a size of an (n-1)^{th} layer of cold plate is smaller than a size of an n^{th} layer of cold plate.

In one implementation, the cold plate is fastened to steps of the first side beam and the second side beam by welding with welding rods, or the cold plate is fastened to steps of the first side beam and the second side beam by bonding with an adhesive tape.

In one implementation, adhesive slots are respectively formed at the tops of the first side beam and the second side beam, and the adhesive slot is configured to be filled with an adhesive. The battery pack housing further includes a cover plate, where the cover plate covers the tops of the first side beam and the second side beam and is bonded to the adhesive in the adhesive slot.

In one implementation, raised snap walls are further disposed at edges of the tops of the first side beam and the second side beam, and a periphery of the cover plate is snapped into the snap walls.

In one implementation, ends of the first side beam and the second side beam in a length direction are further connected to a connecting beam, and at least one of the first side beam, the second side beam, and the connecting beam is provided with an explosion-proof valve.

In one implementation, the other ends of the first side beam and the second side beam in the length direction are further connected to a mounting beam, and the connecting beam and the mounting beam are configured to mount and fasten the first side beam to the second side beam.

In one implementation, a battery cell control member is disposed on the mounting beam, and the battery cell control member is configured to electrically connect to the battery cell.

In one implementation, the battery pack housing further includes a thermal insulation layer and a bottom plate, where the thermal insulation layer is disposed on one side of a first layer of cold plate facing away from a second layer of cold plate, the bottom plate is disposed on one side of the thermal insulation layer facing away from the first layer of cold plate, and the bottom plate is fastened to the first side beam and the second side beam.

In one implementation, a height of an (m-1)^{th} step relative to an (m-2)^{th} step is not less than a total height of an (n-2)^{th} layer of cold plate and an (n-2)^{th} layer of battery cells.

In one implementation, the cold plate is any one of an air-cooled plate, a liquid-cooled plate, or a direct-cooled plate.

In one implementation, the battery pack housing further includes a heat protection member, and the heat protection member is configured to be disposed between at least one layer of battery cells.

In one implementation, the heat protection member includes at least one of a thermally conductive layer, a heat absorption layer, and a heat insulation layer that are stacked.

In one implementation, the heat absorption layer is made of a phase-change heat absorption material.

According to a second aspect, this application further provides a battery pack, including battery cells and the battery pack housing according to any one of the various implementations in the first aspect, where the battery cells are disposed on cold plates of the battery pack housing.

In one implementation, a plurality of battery cells are provided and are divided into n layers, and a layer of battery cells is disposed on each layer of cold plate.

In one implementation, in a direction from the first side beam to the second side beam, a size of an (n-1)^{th} layer of battery cells is smaller than a size of an n^{th} layer of battery cells.

In one implementation, the direction from the first side beam to the second side beam is a length direction of the battery cells, and a length of the (n-1)^{th} layer of battery cells is less than a length of the n^{th} layer of battery cells.

In one implementation, at least two of the n layers of battery cells are of different types.

According to a third aspect, this application further provides an electrical device, including the battery pack according to any one of the various implementations in the second aspect.

The tray includes the first side beam and the second side beam, the m steps are separately disposed on either opposite side of the first side beam and the second side beam, the n layers of cold plates are disposed on the corresponding steps, each layer of cold plate is used for arrangement of a layer of battery cells, and the n layers of cold plates perform heat management, so that the battery pack operates reliably and stably. Compared with an existing solution of stacking a plurality of battery packs to form a whole module, the battery pack in the embodiments of this application is compact in structure, small in volume, and easy to use in practice.

### BRIEF DESCRIPTION OF DRAWINGS

To describe technical solutions in embodiments of this application or in the prior art more clearly, the following briefly describes accompanying drawings required for describing the embodiments or the prior art. It is clear that the accompanying drawings in the following description show merely some embodiments of this application, and a person of ordinary skill in the art may still derive other drawings from these accompanying drawings without creative efforts.
FIG. 1 is an exploded view of a structure of a battery pack according to an embodiment;
FIG. 2 is an exploded view of a structure of the battery pack of FIG. 1 from another perspective;
FIG. 3 is a top view of the battery pack of FIG. 1;
FIG. 4 is a cross-sectional exploded view of a structure along an A-A direction in FIG. 3; and
FIG. 5 is a diagram of a structure of an electrical device according to an embodiment.

### REFERENCE NUMERALS:

10: tray; 11: first side beam; 12: second side beam; 121: 1^{st} step; 122: 1^{st} step surface; 123: 2^{nd} step; 124: 2^{nd} step surface; 125: 3^{rd} step; 126: 3^{rd} step surface; 127: adhesive slot; 128: snap wall; 13: connecting beam; 131: ventilation hole; 14: mounting beam; 15: hollowed hole; 16: explosion-proof valve;
21: first cold plate; 22: second cold plate;
31: first battery cell; 32: second battery cell; 33: battery cell control member;
41: first heat protection member; 411: thermally conductive layer; 412: heat absorption layer; 413: heat insulation layer; 42: second heat protection member;
51: first welding rod; 52: second welding rod; 53: third welding rod;
60: cover plate; 70: thermal insulation layer; 80: bottom plate.

### DESCRIPTION OF EMBODIMENTS

The technical solutions in the embodiments of this application will be clearly and entirely described below in combination with the accompanying drawings in the embodiments of this application. It will be appreciated that, the described embodiments are only some of the embodiments of this application, not all of the embodiments. Based on the embodiments in this application, all other embodiments obtained by those of ordinary skill in the art without doing any creative work shall fall within the scope of protection of this application.

It should be noted that when a component is referred to as being "fastened to" another component, the component may be directly disposed on another component or there may also be an intermediate component. It should be noted that when a component is referred to as being "connected to" another component, the component may be directly connected to another component or there may be an intermediate component.

Unless defined otherwise, all technical and scientific terms used in this application have same meanings as commonly understood by those skilled in the technical field of this application. Terms used in the specification of this application are only for the objective of describing specific embodiments and are not intended to limit this application. A term "and/or" used in this application includes any and all combinations of one or more associated listed items.

Some embodiments of this application are described in detail below in combination with the accompanying drawings. In the absence of a conflict, the following embodiments and features in the embodiments may be mutually combined.

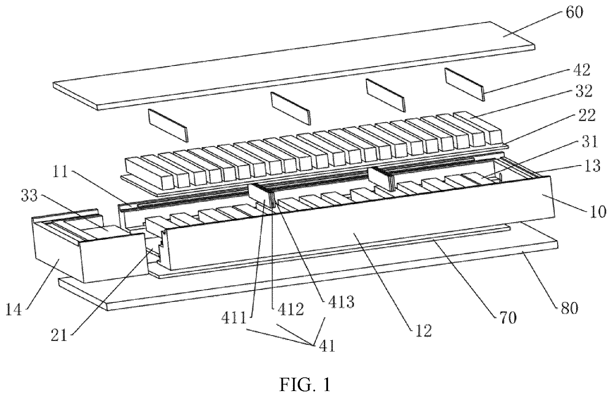

With reference to FIG. 1 to FIG. 4, an embodiment of this application provides a battery pack, including a battery pack housing and battery cells, wherein the battery pack housing includes a tray 10 and n layers of cold plates. A plurality of battery cells are provided and are divided into n layers, and a layer of battery cells is separately disposed on each layer of cold plate.

FIG. 1, FIG. 2, and FIG. 4 show that the cold plates include a first cold plate 21 and a second cold plate 22 and the battery cells include a first layer of battery cells and a second layer of battery cells.

The tray 10 includes a first side beam 11 and a second side beam 12 opposite to each other; and m steps are separately disposed on either opposite side of the first side beam 11 and the second side beam 12, where m≥3.

Two opposite ends of the n layers of cold plates are disposed on corresponding steps of the first side beam 11 and the second side beam 12, each layer of cold plate corresponds to one step, each layer of cold plate is used for arrangement of a layer of battery cells, and 2≤n≤m.

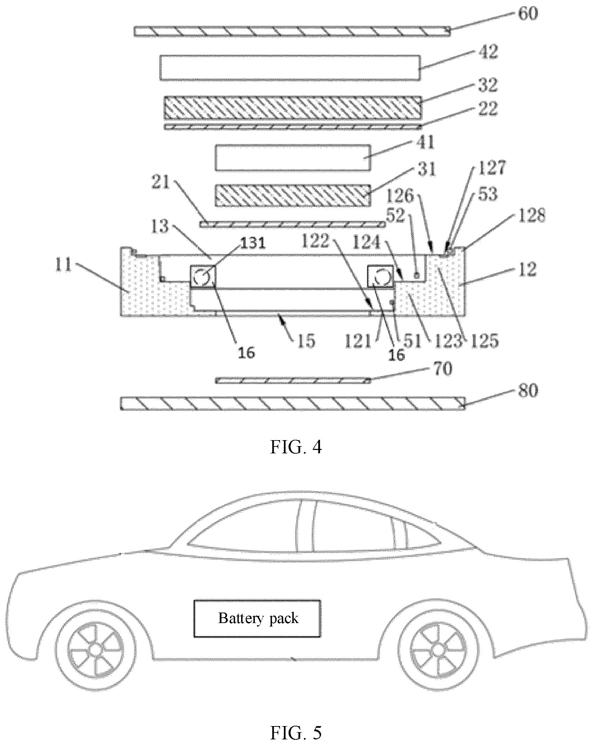

From the bottom to the top of the first side beam 11, the m steps and the n layers of cold plates are numbered in an ascending order. FIG. 4 shows a 1^{st} step 121, a 2^{nd} step 123, a 3^{rd} step 125, a first layer of cold plate (a first cold plate 21), and a second layer of cold plate (a second cold plate 22), m=3, and n=2. In this application, as a main embodiment for discussion, it should be understood that values of m and n may be others, which are not limited.

The first side beam 11 and the second side beam 12 may be made from solid rods by machining processes such as cutting, or may be made from solid rods by processes such as die casting and forging, or may be hollow structures obtained by assembling a plurality of sheet structures by processes such as welding, which is not limited.

The first side beam 11 and the second side beam 12 are parallel to each other, and the steps are formed on either opposite side thereof. Shapes of the first side beam 11 and the second side beam 12 may be in mirror symmetry.

With reference to FIG. 4, taking the second side beam 12 as an example, the second side beam 12 is provided with three steps: the 1^{st} step 121, the 2^{nd} step 123, and the 3^{rd} step 125. The 1^{st} step 121 serves as the bottom of the second side beam 12 and protrudes from the 2^{nd} step 123 toward the first side beam 11. The 2^{nd} step 123 serves as a middle portion of the second side beam 12 and protrudes from the 3^{rd} step 125 toward the first side beam 11. The 1^{st} step 121 is provided with a 1^{st} step surface 122, the 2^{nd} step 123 is provided with a 2^{nd} step surface 124, and the 3^{rd} step 125 is provided with a 3^{rd} step surface 126, where the 1^{st} step surface 122 may be parallel to the 2^{nd} step surface 124, and the 3^{rd} step surface 126 may be parallel or not parallel to the 2^{nd} step surface 124, which is not limited. The 1^{st} step surface 122, the 2^{nd} step surface 124, and the 3^{rd} step surface 126 may all be planes, or certainly may be curved surfaces. The embodiments of this application are illustrated mainly by taking planes as an example. A surface of the 3^{rd} step 125 serves as a top surface of the second side beam 12. Optionally, a number of steps of the second side beam 12 is not limited to three, and may also be four, five, six, or the like, that is, m is not limited to 3, and may also be 4, 5, 6..., which is not limited.

For a shape of the first side beam 11, refer to the shape of the second side beam 12. With reference to FIG. 4, for example, if the second side beam 12 is provided with three steps, the first side beam 11 is also provided with three steps, and step surfaces of corresponding steps at each level are located on a same plane. That is, a step surface of a 1^{st} step 121 of the first side beam 11 and a 1^{st} step surface 122 of the second side beam 12 are located on a same plane to form a first supporting surface; a step surface of a 2^{nd} step 123 of the first side beam 11 and a 2^{nd} step surface 124 of the second side beam 12 are located on a same plane to form a second supporting surface; and a step surface of a 3^{rd} step 125 of the first side beam 11 and a 3^{rd} step surface 126 of the second side beam 12 are located on a same plane to form a third supporting surface.

There is a spacing between the first side beam 11 and the second side beam 12, that is, there is a spacing between the 1^{st} step 121 of the first side beam 11 and the 1^{st} step 121 of the second side beam 12, so that a hollowed hole 15 is formed. Optionally, an extension direction of the first side beam 11 and the second side beam 12 is a length direction of the tray 10, the direction from the first side beam 11 to the second side beam 12 is a width direction of the tray 10, and a length direction and a width direction of the hollowed hole 15 respectively correspond to the length direction and the width direction of the tray 10.

The tray 10 further includes a connecting beam 13 and a mounting beam 14, wherein the connecting beam 13 is connected to one end of the first side beam 11 and the second side beam 12 in the length direction (namely, the extension direction of the first side beam 11 and the second side beam 12, also referred to as the length direction of the tray 10), and the mounting beam 14 is connected to the other opposite end of the first side beam 11 and the second side beam 12 in the length direction. In such a manner, the tray 10 forms a ring-shaped structure, and the first side beam 11 is mounted and fastened to the second side beam 12 by using the connecting beam 13 and the mounting beam 14, so that the tray 10 forms a whole.

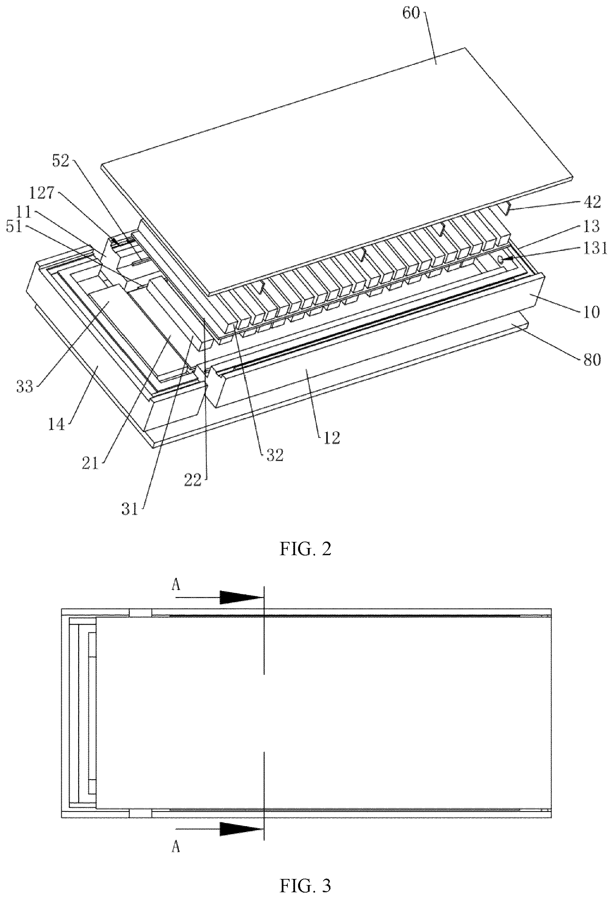

The connecting beam 13 and the mounting beam 14 may be of a flat plate shape, a rod shape, or other structures, which is not limited. Optionally, with reference to FIG. 1 and FIG. 2, the connecting beam 13 is of a flat plate structure, the mounting beam 14 is of a "["-shaped plate structure, and two ends of the "["-shaped structure are respectively connected to the ends of the first side beam 11 and the second side beam 12 in the length direction.

Taking m=3 and n=2 as an example, arrangement relationships between the cold plates and the steps are illustrated as follows.

Two opposite ends of the first cold plate 21 are disposed on the 1^{st} steps 121 of the first side beam 11 and the second side beam 12. Specifically, one end of the first cold plate 21 is mounted on the step surface of the 1^{st} step 121 of the first side beam 11, and the other end of the first cold plate 21 is mounted on the 1^{st} step surface 122 of the 1^{st} step 121 of the second side beam 12. A shape of the first cold plate 21 fits with a shape of the tray 10. For example, a length direction of the first cold plate 21 is the length direction of the tray 10, namely, the length direction of the first side beam 11 or the second side beam 12; and a width direction of the first cold plate 21 is the width direction of the tray 10, namely, the direction from the first side beam 11 to the second side beam 12. The first cold plate 21 is mounted and fastened to the 1^{st} steps 121 of the first side beam 11 and the second side beam 12, and a mounting and fastening manner is not limited.

The first layer of battery cells is disposed on the first cold plate 21. The first layer of battery cells is mounted and fastened to the first cold plate 21, and a mounting and fastening manner may be bonding. For example, a structural adhesive or a thermally conductive adhesive may be used to fasten the first layer of battery cells to the first cold plate 21. The first cold plate 21 can control the temperature of the first layer of battery cells. The temperature control may specifically refer to dissipating heat or heating the first layer of battery cells. A specific structure of the first layer of battery cells is not limited.

Two opposite ends of the second cold plate 22 are disposed on the 2^{nd} steps 123 of the first side beam 11 and the second side beam 12. Specifically, one end of the second cold plate 22 is mounted on the step surface of the 2^{nd} step 123 of the first side beam 11, and the other end of the second cold plate 22 is mounted on the 2^{nd} step surface 124 of the 2^{nd} step 123 of the second side beam 12. A shape of the second cold plate 22 fits with the shape of the tray 10. For example, a length direction of the second cold plate 22 is the length direction of the tray 10, namely, the length direction of the first side beam 11 or the second side beam 12, and a width direction of the second cold plate 22 is the width direction of the tray 10, namely, the direction from the second side beam 12 to the second side beam 12. The second cold plate 22 is mounted and fastened to the 2^{nd} steps 123 of the first side beam 11 and the second side beam 12, and a mounting and fastening manner is not limited.

The second layer of battery cells is disposed on the second cold plate 22. The second layer of battery cells is mounted and fastened to the second cold plate 22, and a mounting and fastening manner may be bonding. For example, a structural adhesive or a thermally conductive adhesive may be used to fasten the second layer of battery cells to the second cold plate 22. The second cold plate 22 can control the temperature of the second layer of battery cells. The temperature control may specifically refer to dissipating heat or heating the second layer of battery cells. A specific structure of the second layer of battery cells is not limited. The first layer of battery cells and the second layer of battery cells may be a same type or different types of battery cells, such as lithium iron phosphate batteries, ternary system batteries, or cylindrical series, square housing series or soft pack series, which are not limited.

With reference to FIG. 4, a height of an (m-1)^{th} step relative to an (m-2)^{th} step is not less than a total height of an (n-2)^{th} layer of cold plate and an (n-2)^{th} layer of battery cells.

Specifically, a height of the 2^{nd} step 123 relative to the 1^{st} step 121 should not be less than a total height of the first cold plate 21 and the first layer of battery cells relative to the 1^{st} step 121, that is, a spacing between the 2^{nd} step surface 124 and the 1^{st} step surface 122 should not be less than a total thickness of the first cold plate 21 and the first layer of battery cells, so that the first layer of battery cells is prevented from interfering with the second cold plate 22 to avoid a failure in mounting and fastening the second cold plate 22 to the 2^{nd} step 123.

Similarly, a height of the 3^{rd} step 125 relative to the 2^{nd} step 123 should not be less than a total height of the second cold plate 22 and the second layer of battery cells relative to the 2^{nd} step 123, that is, a spacing between the 3^{rd} step surface 126 and the 2^{nd} step surface 124 should not be less than a total thickness of the second cold plate 22 and the second layer of battery cells, so that the second layer of battery cells is prevented from interfering with a cover plate 60 to avoid a failure in mounting and fastening the cover plate 60 to the 3^{rd} step 125.

A side surface of the 1^{st} step 121 may be a plane perpendicular to the step surface of the 1^{st} step 121, and a side surface of the 2^{nd} step 123 may be a plane perpendicular to the step surface of the 2^{nd} step 123. Taking the second side beam 12 as an example, a side surface of the 1^{st} step 121 (a surface facing the first side beam 11, the same below) is perpendicular to the 1^{st} step surface 122, and a side surface of the 2^{nd} step 123 is perpendicular to the 2^{nd} step surface 124. The 1^{st} step surface 122 is parallel to a bottom surface of the first side beam 11, and a bottom surface and a top surface (namely, the 3^{rd} step surface 126) of the second side beam 12 are parallel. Therefore, the tray 10 is simple in structure and is convenient to be mounted to other structures.

The side surface of the 1^{st} step 121 is connected to the 1^{st} step surface 122 and the bottom surface of the second side beam 12, the side surface of the 2^{nd} step 123 is connected to the 2^{nd} step surface 124 and the 1^{st} step surface 122, and the side surface of the 3^{rd} step 125 is connected to the 3^{rd} step surface 126 and the 2^{nd} step surface 124. Widths of the 1^{st} step surface 122, the 2^{nd} step surface 124 and the 3^{rd} step surface 126 (namely, a size in the direction from the first side beam 11 to the second side beam 12) can be specified as required.

In the embodiments of this application, the spacing between the first side beam 11 and the second side beam 12 can be specified based on different requirements of different vehicle models, lengths of a connecting plate and a mounting plate (namely, the size in the direction from the first side beam 11 to the second side beam 12) can be specified as required, and a width of the hollowed hole 15 can be specified as required. For example, the extension direction of the first side beam 11 and the second side beam 12 is the length direction of the tray 10, and the direction from the first side beam 11 to the second side beam 12 is the width direction of the tray 10. During application to some vehicle models, the spacing between the first side beam 11 and the second side beam 12 is specified to be relatively short, so that a width of the tray 10 is less than a length of the tray 10, and a width of the hollowed hole 15 is less than a length of the hollowed hole 15; and during application to other vehicle models, the spacing between the first side beam 11 and the second side beam 12 is increased, so that the width of the tray 10 is greater than or equal to the length of the tray 10, and the width of the hollowed hole 15 is also greater than or equal to the length of the hollowed hole 15.

The spacing between the first side beam 11 and the second side beam 12 can be adjusted as required, and a span between steps, at each level, on the first side beam 11 and the second side beam 12 can be adjusted as required. In other words, the spacing between the 1^{st} step 121 of the first side beam 11 and the 1^{st} step 121 of the second side beam 12 can be adjusted, so that the width of the corresponding first cold plate 21 can be adjusted, and the size of the first layer of battery cells can be adjusted; and the spacing between the 2^{nd} step 123 of the first side beam 11 and the 2^{nd} step 123 of the second side beam 12 can be adjusted, so that the width of the corresponding second cold plate 22 can be adjusted, and the size of the second layer of battery cells can be adjusted. Therefore, the spacing between the first side beam 11 and the second side beam 12 can be adjusted based on different vehicle models, so that compatibility is strong.

Therefore, a simple adjustment can be made for different vehicle models to meet requirements of different vehicle models for battery packs. For example, for a miniature vehicle, the spacing between the first side beam 11 and the second side beam 12 can be specified to be relatively short, so that the sizes of the first layer of battery cells and the second layer of battery cells are relatively small, a battery capacity is relatively low, and therefore a power reserve requirement of a small-sized vehicle for a short-distance transportation can be met. For a medium-sized vehicle, the spacing between the first side beam 11 and the second side beam 12 can be specified to be longer, so that the sizes of the first layer of battery cells and the second layer of battery cells are larger, a battery capacity is higher, and therefore a requirement for medium-distance and long-distance vehicle driving endurance is met. For a large vehicle, the spacing between the first side beam 11 and the second side beam 12 can be specified to be even longer, so that the sizes of the first layer of battery cells and the second layer of battery cells are even larger, a battery capacity is even higher, and therefore a requirement for long-distance vehicle driving endurance is met.

For a battery pack, heat management thereof directly affects performance. Therefore, through arrangement of the first cold plate 21 and the second cold plate 22, in one aspect, the first cold plate 21 plays a role of supporting the first layer of battery cells, and the second cold plate 22 plays a role of supporting the second layer of battery cells; and in another aspect, the first cold plate 21 can perform heat management on the first layer of battery cells, and the second cold plate 22 can perform heat management on the second layer of battery cells. Taking the heat management performed by the first cold plate 21 on the first layer of battery cells as an example, the first cold plate 21 can heat the first layer of battery cells when a temperature of the first layer of battery cells is lower than a normal operating temperature, and dissipate heat to cool the first layer of battery cells when a temperature of the first layer of battery cells is higher than the normal operating temperature. For heat management performed by the second cold plate 22 on the second layer of battery cells, refer to the foregoing description, and details are not described again. Therefore, the battery pack has a good heat management capability, so that reliable and stable operation is ensured.

Therefore, based on the battery pack and the battery pack housing provided in the embodiments of this application, the tray 10 including the first side beam 11 and the second side beam 12 is disposed, the m steps 121 are separately disposed on either opposite side of the first side beam 11 and the second side beam 12, the n layers of cold plates are disposed on the corresponding steps, each layer of cold plate is used for arrangement of a layer of battery cells, n layers of battery cells are disposed in one tray 10, and the n layers of cold plates perform heat management, so that the battery pack operates reliably and stably. Compared with an existing solution of stacking a plurality of battery packs to form a whole module, the battery pack in the embodiments of this application is compact in structure, small in volume and easy to use in practice.

Optionally, with reference to FIG. 4, in the direction from the first side beam 11 to the second side beam 12, a size of an (n-1)^{th} layer of cold plate is smaller than a size of an n^{th} layer of cold plate. Optionally, the direction from the first side beam 11 to the second side beam 12 is the width direction of the first cold plate 21 and the second cold plate 22, and a width of the first cold plate 21 is less than a width of the second cold plate 22. Therefore, the first cold plate 21 can be mounted and fastened to the 1^{st} steps 121 of the first side beam 11 and the second side beam 12, and the second cold plate 22 can be mounted and fastened to the 2^{nd} steps 123 of the first side beam 11 and the second side beam 12, to play a supporting role. Meanwhile, the second cold plate 22 has a greater width, so that a larger heating or heat-dissipating area can be specified. Therefore, when an occupied area of the second layer of battery cells disposed on the second cold plate 22 is larger than an occupied area of the first layer of battery cells on the first cold plate 21, a heat management requirement is still met.

Optionally, the first cold plate 21 is any one of an air-cooled plate, a liquid-cooled plate, or a direct-cooled plate. The second cold plate 22 is any one of an air-cooled plate, a liquid-cooled plate, or a direct-cooled plate.

Specifically, the air-cooled plate may be provided with a base plate and fins connected to the base plate, or may have other structures, which is not limited. A flow channel may be disposed inside the liquid-cooled plate, and openings may be formed in surfaces of the tray 10 and the liquid-cooled plate to communicate with the flow channel, so that a coolant flows in the flow channel to guide out heat of the battery cell. The direct-cooled plate can achieve a heat dissipation requirement by means of phase-change heat absorption and heat release properties of a material. It is understandable that the first cold plate 21 and the second cold plate 22 may have a heating function, and the heating function may be achieved by disposing a heating coil on the plate, by inletting a high-temperature liquid into the flow channel, or in other ways, which is not limited.

The first cold plate 21 and the second cold plate 22 can be of a same type or of different types. For example, the first cold plate 21 and the second cold plate 22 can be a combination of a liquid-cooled plate and a direct-cooled plate, or a combination of a liquid-cooled plate and a liquid-cooled plate, which are not limited.

The cold plate is disposed to be any one of an air-cooled plate, a liquid-cooled plate, or a direct-cooled plate, so that the heat management requirement can be met; and moreover, the foregoing three cold plates are mature in technology and low in cost.

With reference to FIG. 1 and FIG. 2, the first layer of battery cells includes a plurality of first battery cells 31 spaced apart from each other, and the second layer of battery cells includes a plurality of second battery cells 32 spaced apart from each other.

With reference to FIG. 4, in the direction from the first side beam 11 to the second side beam 12, a size of an (n-1)^{th} layer of battery cells is smaller than a size of an n^{th} layer of battery cells. Optionally, the direction from the first side beam 11 to the second side beam 12 is a length direction of the first battery cell 31 and the second battery cell 32, and a length of an (n-1)^{th} layer of battery cells is less than a length of an n^{th} layer of battery cells. For example, a length of the first battery cell 31 is less than a length of the second battery cell 32.

Various accompanying drawings of this application only show an approximate shape of a battery cell in a specific embodiment. It should be understood that the first battery cell 31 and the second battery cell 32 can be of any feasible type, which is not limited in the embodiments of this application. The length of the first battery cell 31 is less than the length of the second battery cell 32, so that in the case of a same battery cell type, a capacity of the second battery cell 32 is higher than a capacity of the first battery cell 31. With regard to the first layer of battery cells and the second layer of battery cells, in the case of a same arrangement density, a capacity of the second layer of battery cells is higher than a capacity of the first layer of battery cells. In an existing solution of stacking a plurality of layers of battery packs, each layer of battery pack uses a layer of battery cells, so that capacities of a plurality of layers of battery cells after being stacked are equal, that is, a plurality of first layers of battery cells in the embodiments of this application are stacked. However, in the embodiments of this application, capacities of different layers of battery cells are different, and the capacity of the second layer of battery cells is higher than the capacity of the first layer of battery cells, so that an overall battery capacity of the battery pack can be increased.

Optionally, at least two of the n layers of battery cells are of different types. Specifically, different types may mean different capacities, such as low-capacity battery cells or high-capacity battery cells; different types may mean different kinds, such as lithium iron phosphate battery cells or ternary lithium battery cells; and different types may mean different shapes, such as cylindrical battery cells, square housing battery cells, or soft pack battery cells.

The first side beam 11 and the second side beam 12 are separately provided with the 1^{st} step 121 and the 2^{nd} step 123, a span between the two 1^{st} steps 121 is less than a span between the two 2^{nd} steps 123, and the width of the first cold plate 21 is less than the width of the second cold plate 22, so that the second cold plate 22 cannot be mounted to the two 1^{st} steps 121 because of interference, and therefore an assembling error can be avoided. Meanwhile, the length of the first battery cell 31 is less than the length of the second battery cell 32. When spacing distances between end surfaces of the two battery cells in the length direction and the side beams are the same, the length of the second battery cell 32 can be greater than the span between the 1^{st} steps 121, that is, greater than the width of the hollowed hole 15. Therefore, a space formed by forming the 2^{nd} steps 123 on the side beams is effectively utilized, a more compact structure is obtained, the space is more sufficiently utilized, and therefore an energy density of the battery pack can be improved.

It should be understood that the span between the two 1^{st} steps 121 is a distance between a side surface of the 1^{st} step 121 of the first side beam 11 (a surface facing the second side beam 12) and the side surface of the 1^{st} step 121 of the second side beam 12 (the surface facing the first side beam 11), and the span is also the width of the hollowed hole 15; and the span between the two 2^{nd} steps 123 is a distance between a side surface of the 2^{nd} step 123 of the first side beam 11 (a surface facing the second side beam 12) and the side surface of the 2^{nd} step 123 of the second side beam 12 (a surface facing the first side beam 11). A span between the two 3^{rd} steps 125 is similar, and is not described in detail.

The width of the first cold plate 21 is greater than the span between the two 1^{st} steps 121, and less than or equal to the span between the two 2^{nd} steps 123, so that the first cold plate 21 can be mounted and fastened to the two 1^{st} steps 121 without interfering with the 2^{nd} steps 123. When the width of the first cold plate 21 is equal to the span between the two 2^{nd} steps 123, two end surfaces of the first cold plate 21 in the width direction respectively abut against the side surfaces of the two 2^{nd} steps 123, and the first cold plate 21 can prevent the first side beam 11 and the second side beam 12 from drawing close to each other.

The width of the second cold plate 22 is greater than the span between the two 2^{nd} steps 123, and less than or equal to the span between the two 3^{rd} steps 125, so that the second cold plate 22 can be mounted and fastened to the two 2^{nd} steps 123 without interfering with the 3^{rd} steps 125. When the width of the second cold plate 22 is equal to the span between the two 3^{rd} steps 125, two end surfaces of the second cold plate 22 in the width direction respectively abut against the side surfaces of the two 3^{rd} steps 125, and the second cold plate 22 can also prevent the first side beam 11 and the second side beam 12 from drawing close to each other.

The length of the first battery cell 31 is less than or equal to the width of the first cold plate 21, and an orthographic projection of the first layer of battery cells, formed by the plurality of first battery cells 31, on the first cold plate 21 all falls within the first cold plate 21 and does not exceed the first cold plate 21, so that the first cold plate 21 can effectively perform heat management on the first layer of battery cells.

The length of the second battery cell 32 is less than or equal to the width of the second cold plate 22, and an orthographic projection of the second layer of battery cells, formed by the plurality of second battery cells 32, on the second cold plate 22 all falls within the second cold plate 22 and does not exceed the second cold plate 22, so that the second cold plate 22 can effectively perform heat management on the second layer of battery cells.

In one implementation, a surface of the second cold plate 22 facing away from the second layer of battery cells contacts the first battery cells 31, that is, a spacing between the 1^{st} step surface 122 and the 2^{nd} step surface 124 is equal to the total thickness of the first cold plate 21 and the first layer of battery cells, so that the second cold plate 22 can further perform heat management on the first layer of battery cells.

Optionally, with reference to FIG. 2 and FIG. 4, the first cold plate 21 is fastened to the 1^{st} steps 121 of the first side beam 11 and the second side beam 12 by welding with welding rods. Specifically, first welding rods 51 may be disposed on the 1^{st} steps 121 of the first side beam 11 and the second side beam 12, and the first cold plate 21 is fastened to the two 1^{st} steps 121 by high-temperature melting of the first welding rods 51. A specific welding process may be, for example, laser welding, which is not limited. The welding rods approximately extend along the length direction of the first side beam 11 to achieve welding fastening at each position.

Optionally, with reference to FIG. 2 and FIG. 4, second welding rods 52 can be disposed on the two 2^{nd} steps 123, and the second cold plate 22 is fastened to the two 2^{nd} steps 123 by the second welding rods 52.

Further optionally, the first cold plate 21 is fastened to the 1^{st} steps 121 of the first side beam 11 and the second side beam 12 by bonding with an adhesive tape. The adhesive tape may be a structural adhesive, a thermally conductive adhesive, or the like, which is not limited.

Further optionally, the second cold plate 22 may also be fastened to the two 2^{nd} steps 123 by bonding with an adhesive tape.

It is understandable that the first cold plate 21 and the second cold plate 22 can be mounted and fastened to the first side beam 11 and the second side beam 12 by a same process or by different processes. Except for the processes provided in the foregoing embodiments, any other feasible process can also be utilized, which is not limited.

In one implementation, with reference to FIG. 2 and FIG. 4, at least one of the first side beam 11, the second side beam 12, and the connecting beam 13 is provided with an explosion-proof valve (not shown in drawings). Specifically, two ends of the connecting beam 13 are respectively connected to a same end of the first side beam 11 and the second side beam 12 in the length direction. FIG. 2 and FIG. 4 show that a ventilation hole 131 is formed in the connecting beam 13, and an explosion-proof valve is disposed on the connecting beam 13 and closes the ventilation hole 131. There may be a plurality of ventilation holes 131. Two ventilation holes 131 are shown in FIG. 2 and FIG. 4. Correspondingly, there may also be a plurality of explosion-proof valves. Two explosion-proof valves are shown in FIG. 4. Optionally, a ventilation hole 131 may also be formed in the first side beam 11 or the second side beam 12, and a corresponding explosion-proof valve may also be disposed on the first side beam 11 or the second side beam 12. It should be understood that the explosion-proof valve may be disposed on one, two, or three of the first side beam 11, the second side beam 12, and the connecting beam 13, which is not limited. FIG. 4 shows that the explosion-proof valve 16 is disposed on the ventilation hole 131.

By use of the explosion-proof valve, when a battery cell generates a gas due to thermal runaway and a gas pressure in the tray 10 rapidly increases to a threshold value, the gas can break through the explosion-proof valve to be released, so that accidents such as an explosion are avoided.

A battery cell control member 33 may be disposed on the mounting beam 14 at the other end in the length direction of the first side beam 11 and the second side beam 12. The battery cell control member 33 is configured to electrically connect to the plurality of first battery cells 31 and the plurality of second battery cells 32 to perform charging and discharging management on the battery cells. Each layer of battery cells may use one battery cell control member 33, or a plurality of layers of battery cells may share one battery cell control member 33, which is not limited. A specific structure, a control principle and other properties of the battery cell control member 33 are not limited in the embodiments of this application.

With reference to FIG. 1, FIG. 2, and FIG. 4, the battery pack housing further includes a heat protection member, and the heat protection member is configured to be disposed between at least one layer of battery cells. Optionally, the heat protection member includes a first heat protection member 41 and a second heat protection member 42. The first heat protection member 41 is disposed between the plurality of first battery cells 31, and the second heat protection member 42 is disposed between the plurality of second battery cells 32. The first heat protection member 41 and the second heat protection member 42 are disposed between adjacent battery cells, that is, the first heat protection member 41 is disposed between any two adjacent first battery cells 31 in the plurality of first battery cells 31, and the second heat protection member 42 is disposed between any two adjacent second battery cells 32 in the plurality of second battery cells 32. There may be a plurality of first battery cells 31. A first heat protection member 41 may be disposed between every two adjacent first battery cells 31, or a first heat protection member 41 may be disposed between every two first battery cells 31. Certainly, there may be other arrangements, which are not limited. It may be understood that in the plurality of battery cells of the first layer of battery cells, a plurality of first heat protection members 41 are disposed as uniformly as possible to achieve a relatively uniform heat protection effect at each position of the first layer of battery cells. For an arrangement of a plurality of second heat protection members 42, refer to the foregoing description, and details are not described again.

The first heat protection member 41 and the second heat protection member 42 play a role of guiding out heat generated in the plurality of battery cells as quickly as possible to prevent heat accumulation from causing thermal runaway of the battery cells. On the basis of the heat management performed by the first cold plate 21 and the second cold plate 22, by use of the first heat protection member 41 and the second heat protection member 42, a heat management level of the battery pack can be improved, so that the battery pack is more stable and reliable.

Optionally, with reference to FIG. 1, the first heat protection member 41 includes at least one of a thermally conductive layer 411, a heat absorption layer 412, and a heat insulation layer 413 that are stacked; and/or the second heat protection member 42 includes at least one of a thermally conductive layer 411, a heat absorption layer 412, and a heat insulation layer 413 that are stacked.

FIG. 1 shows that the first heat protection member 41 includes the thermally conductive layer 411, the heat absorption layer 412, and the heat insulation layer 413 that are stacked. It will be understood that the first heat protection member 41 may also be one, two, or three of the thermally conductive layer 411, the heat absorption layer 412, and the heat insulation layer 413, which is not limited. The thermally conductive layer 411 plays a role of guiding out heat of the first battery cell 31, the heat absorption layer 412 plays a role of absorbing heat, and the heat insulation layer 413 plays a role of insulating heat, so that mutual impact of heat between adjacent first battery cells 31 is reduced.

The first heat protection member 41 may be connected to the first side beam 11 and/or the second side beam 12, and the first heat protection member 41 may guide heat to the first side beam 11 or the second side beam 12 to achieve heat dissipation.

As shown in FIG. 1, a working process of the thermally conductive layer 411, the heat absorption layer 412, and the heat insulation layer 413, that are stacked, of the first heat protection member 41 is as follows: heat released by the first battery cell 31 is guided by the thermally conductive layer 411 with a relatively large heat conductivity coefficient to the heat absorption layer 412 to reduce impact of the heat of the first battery cell 31 on other battery cells; the heat is absorbed after entering the heat absorption layer 412; and finally, less heat is transferred to the heat insulation layer 413 for release. Therefore, effects of reducing a heat load layer by layer and absorbing heat layer by layer are achieved. It will be understood that the first heat protection member 41 may be one, two, or three of the thermally conductive layer 411, the heat absorption layer 412, and the heat insulation layer 413, and may also be a structure having more other functional layers, which is not limited.

For a structure of the second heat protection member 42, refer to the foregoing description of the first heat protection member 41, and details are not described again. FIG. 1 shows an embodiment in which the second heat protection member 42 has only one heat absorption layer 412.

Optimally, the heat absorption layer 412 is made of a phase-change heat absorption material. The phase-change heat absorption material may be any feasible phase-change material. A principle of the phase-change material is as follows: the phase-change material absorbs heat to trigger a chemical complex reaction to produce a new substance, thereby absorbing heat. Therefore, a foregoing objective of transferring less heat to the heat insulation layer 413 for release is achieved.

Optionally, with reference to FIG. 2 and FIG. 4, adhesive slots 127 are respectively formed at the tops of the first side beam 11 and the second side beam 12, and the adhesive slot 127 is configured to be filled with an adhesive (not shown in drawings). With reference to FIG. 1, FIG. 2, and FIG. 4, the battery pack housing further includes a cover plate 60, where the cover plate 60 covers the tops of the first side beam 11 and the second side beam 12 and is bonded to the adhesive in the adhesive slot 127.

The adhesive slot 127 is formed in the 3^{rd} step surface 126, and may also be formed in the connecting beam 13 and the mounting beam 14. The adhesive slot 127 is formed to accommodate the adhesive, so that a gap between the cover plate 60 and the 3^{rd} step surface 126 is smaller, and therefore a thickness of the battery pack is reduced and a sealing effect is improved.

The cover plate 60 may be made of a composite material, and has advantages of easy machining, relatively good overall flatness, good positioning, easy assembling, good structural stability, a good appearance, and the like. Optionally, the cover plate 60 is made of a material with a low heat conductivity, to have a better thermal insulation effect. Optionally, the cover plate 60 may also be mounted and fastened to the tray 10 by fasteners such as screws, which is not limited. Optionally, third welding rods 53 may be disposed on the 3^{rd} step surfaces 126, and the cover plate 60 is fastened to the 3^{rd} step surfaces 126 by the third welding rods 53. For arrangement of the third welding rods 53, refer to the foregoing description of the first welding rods 51 and the second welding rods 52, and details are not described herein again.

Optionally, with reference to FIG. 1, FIG. 2, and FIG. 4, raised snap walls 128 are further disposed at edges of the tops of the first side beam 11 and the second side beam 12, and a periphery of the cover plate 60 is snapped into the snap walls 128.

Taking the snap wall 128 disposed on the second side beam 12 as an example, the snap wall 128 is disposed on the 3^{rd} step surface 126, extends along the length direction of the second side beam 12, and is flush with a side surface of the second side beam 12 facing away from the first side beam 11. For the snap wall 128 on the first side beam 11, refer to the foregoing description. It is understandable that snap walls 128 may also be disposed on the connecting beam 13 and the mounting beam 14. The snap wall 128 plays roles of positioning and limiting the cover plate 60.

With reference to FIG. 1, FIG. 2, and FIG. 4, the battery pack housing further includes a thermal insulation layer 70 and a bottom plate 80. The thermal insulation layer 70 is disposed on one side of the first cold plate 21 (the first layer of cold plate) facing away from the second cold plate 22 (the second layer of cold plate). The bottom plate 80 is disposed on one side of the thermal insulation layer 70 facing away from the first cold plate 21, and the bottom plate 80 is fastened to the first side beam 11 and the second side beam 12.

The thermal insulation layer 70 contacts a surface of the first cold plate 21 facing away from the first layer of battery cells by means of the hollowed hole 15, thereby achieving a thermal insulation effect on the first cold plate 21. The thermal insulation layer may be thermal insulation cotton or the like, which is not limited. By use of the thermal insulation layer 70, the first cold plate 21 is kept at a normal working temperature, so that an adverse effect on the first layer of battery cells due to a temperature loss is avoided.

The bottom plate 80 is connected to the first side beam 11 and the second side beam 12 to close the tray 10 and form a stable structure of the tray 10. The bottom plate 80 is approximately of a flat plate shape, and an interior of the bottom plate 80 may be hollowed out to a certain extent. A cross-sectional shape of a hollowed position may be a triangle or the like, which is not limited.

As shown in FIG. 5, an embodiment of this application further provides an electrical device, including the battery pack according to the foregoing embodiments. The electrical device may be an electric vehicle, a household electrical device, or the like, which is not limited.

The electrical device in the embodiment of this application uses the battery pack in the embodiments of this application, and the battery pack uses the battery pack housing in the embodiments of this application. The tray 10 includes the first side beam 11 and the second side beam 12, and the m steps 121 are separately disposed on either opposite side of the first side beam 11 and the second side beam 12, the n layers of cold plates are disposed on the corresponding steps, each layer of cold plate is used for arrangement of a layer of battery cells, n layers of battery cells are disposed in one tray 10, and the n layers of cold plates perform heat management, so that the battery pack operates reliably and stably. Compared with an existing solution of stacking a plurality of battery packs to form a whole module, the battery pack in the embodiments of this application is compact in structure, small in volume and easy to use in practice.

In the description of the embodiments of this application, it should be noted that orientations or positional relationships of terms such as "center", "upper", "lower", "left", "right", "vertical", "horizontal", "inside" and "outside" are orientations or positional relationships based on the accompanying drawings, are only intended to facilitate describing this application and simplifying the description, and do not indicate or imply that an apparatus or component referred to must have specific orientations and be constructed and operated based on the specific orientations, and therefore cannot be understood as limitation on this application.

The foregoing disclosure is only a preferred embodiment of this application, and certainly cannot be used to limit the scope of rights of this application. Those of ordinary skill in the art can understand all or part of flows for implementing the foregoing embodiment, and equivalent changes made according to the claims of this application still fall within the scope covered by this application.

## Claims

1. A battery pack housing, comprising:
a tray (10), comprising a first side beam (11) and a second side beam (12) opposite to each other, wherein m steps are separately disposed on either opposite side of the first side beam (11) and the second side beam (12), m≥3, and the m steps are numbered in an ascending order from the bottom to the top of the first side beam (11); and
n layers of cold plates, wherein two opposite ends of the n layers of cold plates are disposed on corresponding steps of the first side beam (11) and the second side beam (12), each layer of cold plate corresponds to one step, each layer of cold plate is used for arrangement of a layer of battery cells, 2≤n≤m, and the n layers of cold plates are numbered in an ascending order from the bottom to the top of the first side beam (11); and
in a direction from the first side beam (11) to the second side beam (12), a size of an (n-1)^{th} layer of cold plate is smaller than a size of an n^{th} layer of cold plate.

2. The battery pack housing according to claim 1, wherein the cold plate is fastened to steps of the first side beam (11) and the second side beam (12) by welding with welding rods, or the cold plate is fastened to steps of the first side beam (11) and the second side beam (12) by bonding with an adhesive tape.

3. The battery pack housing according to claim 1 or 2, wherein adhesive slots (127) are respectively formed at the tops of the first side beam (11) and the second side beam (12), and the adhesive slot (127) is configured to be filled with an adhesive; and the battery pack housing further comprises a cover plate (60), wherein the cover plate (60) covers the tops of the first side beam (11) and the second side beam (12) and is bonded to the adhesive in the adhesive slot (127).

4. The battery pack housing according to claim 3, wherein raised snap walls (128) are further disposed at edges of the tops of the first side beam (11) and the second side beam (12), and a periphery of the cover plate (60) is snapped into the snap walls (128).

5. The battery pack housing according to any one of claims 1 to 4, wherein ends of the first side beam (11) and the second side beam (12) in a length direction are further connected to a connecting beam (13), and at least one of the first side beam (11), the second side beam (12), and the connecting beam (13) is provided with an explosion-proof valve (16).

6. The battery pack housing according to claim 5, wherein the other ends of the first side beam (11) and the second side beam (12) in the length direction are further connected to a mounting beam (14), and the connecting beam (13) and the mounting beam (14) are configured to mount and fasten the first side beam (11) to the second side beam (12).

7. The battery pack housing according to claim 6, wherein a battery cell control member (33) is disposed on the mounting beam (14), and the battery cell control member (33) is configured to electrically connect to the battery cell.

8. The battery pack housing according to any one of claims 1 to 7, wherein the battery pack housing further comprises a thermal insulation layer (70) and a bottom plate (80), wherein the thermal insulation layer (70) is disposed on one side of a first layer of cold plate (21) facing away from a second layer of cold plate (22), the bottom plate (80) is disposed on one side of the thermal insulation layer (70) facing away from the first layer of cold plate (21), and the bottom plate (80) is fastened to the first side beam (11) and the second side beam (12).

9. The battery pack housing according to any one of claims 1 to 8, wherein a height of an (m-1)^{th} step relative to an (m-2)^{th} step is not less than a total height of an (n-2)^{th} layer of cold plate and an (n-2)^{th} layer of battery cells.

10. The battery pack housing according to any one of claims 1 to 9, wherein the cold plate is any one of an air-cooled plate, a liquid-cooled plate, or a direct-cooled plate.

11. The battery pack housing according to any one of claims 1 to 10, wherein the battery pack housing further comprises a heat protection member, and the heat protection member is configured to be disposed between at least one layer of battery cells.

12. The battery pack housing according to claim 11, wherein the heat protection member comprises at least one of a thermally conductive layer (411), a heat absorption layer (412), and a heat insulation layer (413) that are stacked.

13. The battery pack housing according to claim 12, wherein the heat absorption layer (412) is made of a phase-change heat absorption material.

14. A battery pack, comprising battery cells and the battery pack housing according to any one of claims 1 to 13, wherein the battery cells are disposed on cold plates of the battery pack housing.

15. The battery pack according to claim 14, wherein a plurality of battery cells are provided and are divided into n layers, and a layer of battery cells is disposed on each layer of cold plate.

16. The battery pack according to claim 15, wherein in a direction from the first side beam (11) to the second side beam (12), a size of an (n-1)^{th} layer of battery cells is smaller than a size of an n^{th} layer of battery cells.

17. The battery pack according to claim 15, wherein the direction from the first side beam (11) to the second side beam (12) is a length direction of the battery cells, and a length of the (n-1)^{th} layer of battery cells is less than a length of the n^{th} layer of battery cells.

18. The battery pack according to claim 15, wherein at least two of the n layers of battery cells are of different types.

19. An electrical device, comprising the battery pack according to any one of claims 14 to 18.
